# EUROPEAN PATENT APPLICATION

(11) **EP 4 592 572 A1**
(43) Date of publication of application: **30.07.2025**
(21) Application number: 23879737.7
(22) Date of filing: 13.10.2023
(51) Int. Cl.: F16L 3/14

(54) **PIPE SUPPORT**

(30) Priority: 17.10.2022 JP 2022166075
(71) Applicant: Inaba Denki Sangyo Co., Ltd., Osaka-shi, Osaka 550-0012 (JP)
(72) Inventor: OGINO, Shogo, Osaka-shi, Osaka 550-0012 (JP)
(74) Representative: Grosse Schumacher Knauer von Hirschhausen
(86) International application number: PCT/JP2023/037254
(87) International publication number: WO 2024/085094

(57) **Abstract**

A pipe support (1) for holding a pipe (P) in suspension from a structural body includes: an attachment section (2) attached to a hanging bar-shaped body (B) vertically hanging from the structural body; and a support section (4) configured to hold the pipe (P). The support section (4) includes: an upper support section (40) placed upward of the pipe (P); and a lower support section (50) swingably coupled to the upper support section (40) via a swing pivot point (H) and configured to support the pipe (P) from below. The support section (4) is changed from an open posture, in which the upper support section (40) and the lower support section (50) are opened, to a closed posture, in which the upper support section (40) and the lower support section (50) are closed, in response to attaching of the pipe (P) to the support section (4).

## Description

### Technical Field

The present invention relates to a pipe support.

### Background Art

A pipe support is used for holding a pipe connected to a waterwork, an air conditioner, or the like in such a manner that the pipe is suspended from a structural body such as a slab constituting the ceiling of a building. Japanese Unexamined Patent Application Publication No. 2022-75177 (Patent Literature 1) discloses an example of such a pipe support.

A pipe support (a pipe hanger 1) in Patent Literature 1 includes an attachment section (a tongue buckle 4) attached to a hanging bar-shaped body (a hanger bolt 3) vertically hanging from a structural body (a structure), and a support section coupled to the attachment section to hold a pipe (a pipe 2). The support section includes a pair of split supports (band pieces 8a, 8b) swingably coupled to each other via a swing pivot point (a hinge 5). One swing pivot point is provided for a lower portion of the support section, and after the pair of split supports are attached to the pipe, the pair of split supports are closed, and upper portions of the pair of split supports are coupled to the attachment section via fastening members (a bolt 6, a nut 7).

In such a configuration, at the time when the pipe is held by the pipe support, it is necessary to detach the fastening members to open the pair of split supports, close the pair of split supports with the pipe being held therein, and attach and fasten the fastening members again. Thus, there is room for improvement in workability.

### Citation List

### Patent Literature

Patent Literature 1: Japanese Unexamined Patent Application Publication No. 2022-75177

### Summary of Invention

### Technical Problem

It is desired to achieve a pipe support excellent in workability.

### Solution to Problem

A pipe support according to the present invention is a pipe support for holding a pipe in suspension from a structural body and includes: an attachment section attached to a hanging bar-shaped body vertically hanging from the structural body; and a support section coupled to the attachment section and configured to hold the pipe. The support section includes: an upper support section placed upward of the pipe; and a lower support section swingably coupled to the upper support section via at least one swing pivot point and configured to support the pipe from below. The lower support section includes: a support main body; and an extension portion extending from the support main body to a position overlapping with the upper support section across the at least one swing pivot point. The support section is changed from an open posture, in which the upper support section and the lower support section are opened, to a closed posture, in which the upper support section and the lower support section are closed, in response to attaching of the pipe to the support section.

In this configuration, the support section is constituted by the upper support section and the lower support section configured to support the pipe from above and from below, respectively, and the upper support section and the lower support section are swingably coupled to each other. Hereby, the pipe can be attached with the attachment section and the upper support section being maintained to be coupled to each other. Besides, since the lower support section includes the extension portion extending to a position overlapping with the upper support section across the swing pivot point, the support section is automatically changed from the open posture to the closed posture in response to the outer peripheral surface of the pipe pushing the extension portion at the time when the pipe is attached, thereby making is possible to easily hold the pipe. In combination with this, it is possible to largely improve workability at the time of holding the pipe in suspension from the structural body.

The following describes preferred aspects of the present invention. However, the scope of the present invention is not limited by the exemplary preferred aspects described below.

As one aspect, the pipe support may further include a posture maintaining mechanism configured to maintain the support section in the closed posture.

With this configuration, the pipe can be appropriately maintained to be held by the pipe support after the pipe is held with one touch as described above.

As one aspect, the at least one swing pivot point may include a plurality of swing pivot points, and the lower support section may be swingably coupled to opposite ends of the upper support section via the plurality of swing pivot points.

With this configuration, a pair of lower support sections are configured to swing relative to the upper support section like hinged double doors, so that a wide space can be secured to attach the pipe while the pipe support has a compact configuration as a whole.

As one aspect, the support main body may be heavier than the extension portion.

With this configuration, the support section can appropriately maintain the open posture by the self-weight of the support main body until the pipe is attached.

As one aspect, the at least one swing pivot point may be set at a position deviating from a lowest point of the support section.

With this configuration, it is possible to appropriately achieve a configuration in which the lower support section is changed from the open posture to the closed posture in response to the attachment of the pipe.

As one aspect, the upper support section may include a pair of right and left split bodies, and the pair of right and left split bodies may be coupled to each other and incapable of rotation relative to each other.

With this configuration, the pair of right and left split bodies of the upper support section can be easily coupled to each other with the attachment section being sandwiched between the pair of right and left split bodies. Since the pair of right and left split bodies are coupled to each other in a relatively non-rotatable manner, the whole support section including the pair of right and left split bodies and the lower support section is changed in postured between the open posture and the closed posture with no twisting. Hereby, the pipe can be appropriately held in the closed posture.

As one aspect, the posture maintaining mechanism may include an engageable section provided for the support main body, and an engagement section with which the engageable section is engageable, and the pipe support may further include an engagement guide section disposed on a distal end side from the engagement section and configured to guide the engageable section for the engagement with the engagement section.

With this configuration, the posture maintaining mechanism can be configured appropriately in combination of the engageable section provided for the support main body and the engagement section to be engaged with the engageable section. Since the engagement guide section is disposed on the distal end side from the engagement section, the engageable section is guided to the engagement section such that the engageable section is engaged with the engagement section.

Further features and advantages of the present invention will become clearer by the following illustrative and nonlimiting description of embodiments to be described with reference to the drawings.

### Brief Description of Drawings

Fig. 1 is a front view of a pipe support structure using a pipe support of an embodiment;
Fig. 2 is an exploded perspective view of the pipe support;
Fig. 3 is a perspective view of a support section;
Fig. 4 is a sectional view around a posture maintaining mechanism;
Fig. 5 is a side view around the posture maintaining mechanism;
Fig. 6 is a schematic view illustrating a state of the pipe support during attachment work;
Fig. 7 is a side view of a pipe support in an alternative aspect; and
Fig. 8 is a side view of a pipe support in an alternative aspect.

### Description of Embodiments

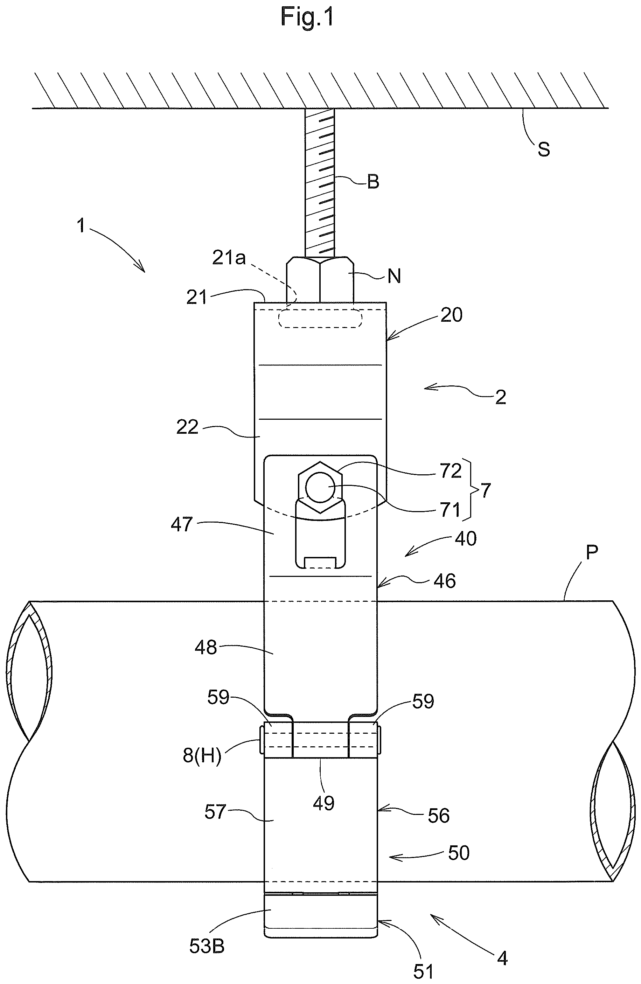

The following will describe an embodiment of a pipe support with reference to the drawings. As illustrated in Fig. 1, a pipe support 1 according to the present embodiment is used to hold a pipe P in suspension from a structural body S. The pipe support 1 is attached to a hanger bolt B vertically hanging from the structural body S such as a slab constituting a ceiling, for example, and holds the pipe P in suspension in such a manner that the pipe P extends laterally.

The hanger bolt B is placed along a disposition direction of the pipe P. A plurality of hanger bolts B is provided at predetermined intervals along the disposition direction of the pipe P, and the pipe P is held in suspension over the disposition direction by respective pipe supports 1 attached to the hanger bolts B. The hanger bolt B may be a continuous thread stud threaded over the whole length or may be a double-end stud with only the opposite ends being threaded. In the present embodiment, the hanger bolt B corresponds to a "hanging bar-shaped body."

As illustrated in Figs. 1 to 3, the pipe support 1 includes an attachment section 2 attached to the hanger bolt B, and a support section 4 configured to hold the pipe P. The attachment section 2 is coupled to the support section 4 via a fastening member 7. The fastening member 7 includes a fastening bolt 71 and a fastening nut 72 threadedly engaged with the fastening bolt 71.

The attachment section 2 is a section for attaching the support section 4 to the hanger bolt B vertically hanging from the structural body S. The attachment section 2 of the present embodiment is constituted by a tongue buckle 20. The tongue buckle 20 includes an attachment plate 21, and a pair of coupling plates 22 extending downward from the attachment plate 21.

The attachment plate 21 is a section attached to the hanger bolt B. The attachment plate 21 is formed in a flat-plate shape. The attachment plate 21 is also formed in a rectangular shape (more specifically, a square shape) in a plan view. The attachment plate 21 has an insertion hole 21a penetrating through the center of the attachment plate 21. A flange-nut N is passed through the insertion hole 21a from its inside. The insertion hole 21a has an inner diameter smaller than a flange of the flange-nut N, and the attachment section 2 is attached to the hanger bolt B with the attachment section 2 being supported on the flange of the flange-nut N threadedly engaged with the hanger bolt B.

The coupling plate 22 is a section coupled to the support section 4. In the present embodiment, a pair of coupling plates 22 are provided to extend downward from a pair of opposite sides of the rectangular attachment plate 21, respectively. The pair of coupling plates 22 are bent at two portions to be formed into a gentle crank shape so that the distance between lower ends (a far side from the attachment plate 21) of the pair of coupling plates 22 is narrower than the distance between upper ends (a near side from the attachment plate 21) thereof. The coupling plate 22 has an insertion hole 22a penetrating through a lower end portion of the coupling plate 22. A shank portion 71B of the fastening bolt 71 constituting the fastening member 7 is passed through the insertion hole 22a.

The support section 4 is a section coupled to the attachment section 2 and hold the pipe P. The support section 4 of the present embodiment has a structure divided mainly in the up-down direction from a functional aspect, and includes an upper support section 40 placed upward of the pipe P and a lower support section 50 supporting the pipe P from below. The upper support section 40 and the lower support section 50 are coupled to each other in such a manner as to be swingable via swing pivot points H.

The upper support section 40 is placed upward of the pipe P. The upper support section 40 covers the pipe P from above. The upper support section 40 of the present embodiment has a structure divided in the right-left direction, and includes a first split body 41 and a second split body 46 as a pair of right and left split bodies.

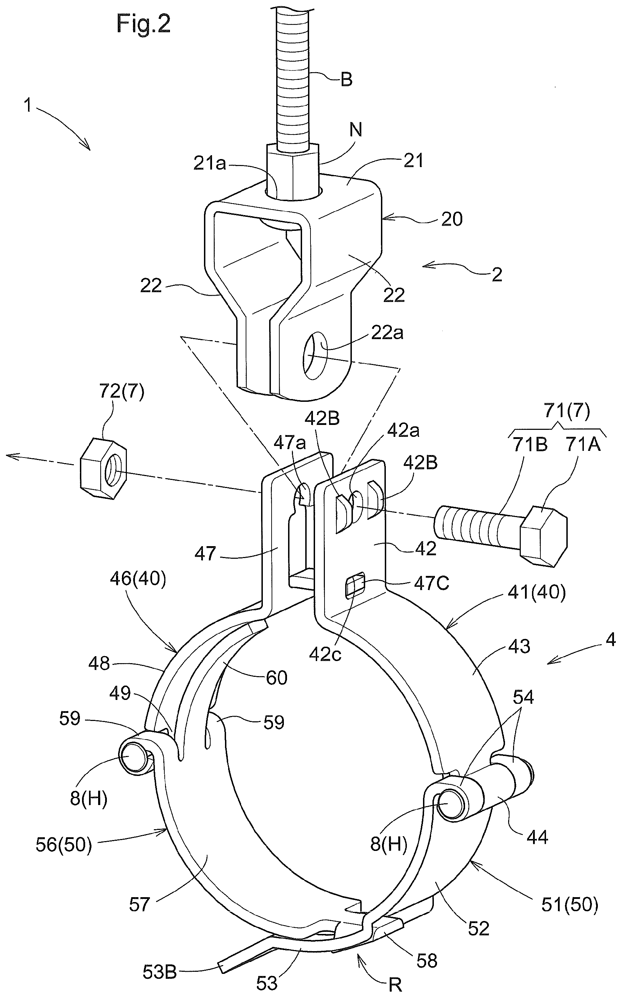

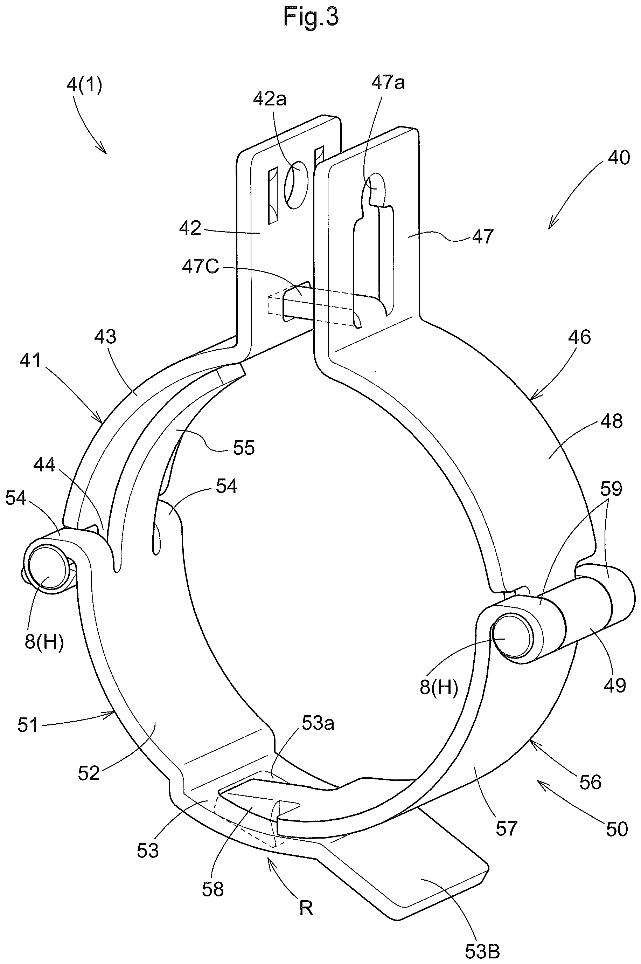

As illustrated in Figs. 2, 3, the first split body 41 includes a flat portion 42, a curved portion 43, and a loop portion 44. These portions are formed integrally by use of a band-shaped steel sheet by press working or the like, for example.

The flat portion 42 is a flat-shaped portion as an upper portion of the first split body 41 and coupled to the attachment section 2. The flat portion 42 is formed in a rectangular shape (more specifically, an oblong shape). The flat portion 42 extends in the up-down direction. The flat portion 42 has an insertion hole 42a penetrating through an upper end portion of the flat portion 42. The shank portion 71B of the fastening bolt 71 constituting the fastening member 7 is passed through the insertion hole 42a.

The flat portion 42 includes protrusions 42B formed near the insertion hole 42a. The protrusions 42B project outwardly. Two protrusions 42B are provided as a pair, and the pair of protrusions 42B face each other across the insertion hole 42a. The pair of protrusions 42B are apart from each other by a distance generally the same as or slightly wider than the width across flats of a head 71A of the fastening bolt 71 constituting the fastening member 7. The pair of protrusions 42B are locked to two surfaces of the head 71A of the fastening bolt 71 which surfaces face each other, thereby preventing rotation (co-rotation) of the fastening bolt 71 at the time when the fastening member 7 is fastened.

The flat portion 42 has a locking hole 42c penetrating through a lower end portion of the flat portion 42. The locking hole 42c is formed in a laterally oblong shape. A distal end of a rising piece 47C formed in the second split body 46 is inserted into the locking hole 42c and locked.

The curved portion 43 extends in such a manner as to arcuately curve from a lower end portion of the flat portion 42. In the present embodiment, the curved portion 43 is formed into a quarter arc shape having a central angle of about 90° in a front view.

The loop portion 44 is provided for a lower end portion of the curved portion 43 in such a manner as to be continuous with the curved portion 43. The loop portion 44 loops outwardly from the curved portion 43. One loop portion 44 is provided for a central area of the lower end portion of the curved portion 43 except opposite ends of the lower end portion in the width direction. Two loop portions 54 of a first lower support section 51 are disposed adjacent to both ends of the loop portion 44.

The second split body 46 includes a flat portion 47, a curved portion 48, and a loop portion 49. These portions are formed integrally by use of a band-shaped steel sheet by press working or the like, for example.

The flat portion 47 is a flat-shaped portion as an upper portion of the second split body 46 and serves as a coupling section coupled to the attachment section 2 together with the flat portion 42 of the first split body 41. The flat portion 47 is formed in a rectangular shape (more specifically, an oblong shape). The flat portion 47 extends in the up-down direction. The flat portion 47 has an insertion hole 47a penetrating through an upper end portion of the flat portion 47. The shank portion 71B of the fastening bolt 71 constituting the fastening member 7 is passed through the insertion hole 47a.

The insertion hole 47a is connected to a long hole formed in a central area of the flat portion 47 and extending in the up-down direction. The long hole is formed at the time of cutting and rising the rising piece 47C provided in a lower end portion of the flat portion 47, and an upper end portion of the long hole is integrally connected to the insertion hole 47a. The rising piece 47C is bent to rise inwardly from the flat portion 47 (toward the first split body 41). The rising piece 47C has a laterally oblong sectional shape. The rising piece 47C has a distal end inserted into the locking hole 42c of the flat portion 42 of the first split body 41 in such a manner to be locked on the inner surface of the locking hole 42c.

The locking of the laterally oblong rising piece 47C on the laterally oblong locking hole 42c achieves a whirl-stop of the first split body 41 with the second split body 46. Thus, the first split body 41 and the second split body 46 as the pair of split bodies constituting the upper support section 40 are coupled to each other and incapable of rotation relative to each other.

The curved portion 48 extends in such a manner as to arcuately curve from a lower end portion of the flat portion 47. In the present embodiment, the curved portion 48 is formed into a quarter arc shape having a central angle of about 90° in a front view.

The loop portion 49 is provided for a lower end portion of the curved portion 48 in such a manner as to be continuous with the curved portion 48. The loop portion 49 loops outwardly from the curved portion 48. One loop portion 49 is provided for a central area of the lower end portion of the curved portion 48 except opposite ends of the lower end portion in the width direction. Two loop portions 59 of a second lower support section 56 are disposed adjacent to both ends of the loop portion 49.

The lower support section 50 is swingably coupled to the upper support section 40. The support section 4 is changeable in position, along with the swinging, between an open posture, in which the upper support section 40 and the lower support section 50 are opened, and a closed posture, in which the upper support section 40 and the lower support section 50 are closed. The lower support section 50 is placed downward of the pipe P in the closed posture. The lower support section 50 is placed downward of the pipe P to support the pipe P from below in the closed posture.

In the present embodiment, the lower support section 50 is swingably coupled to opposite ends of the upper support section 40. The first lower support section 51 constituting the lower support section 50 is swingably coupled to the loop portion 44 in the lower end portion of the first split body 41 constituting the upper support section 40, and the second lower support section 56 constituting the lower support section 50 is swingably coupled to the loop portion 49 in the lower end portion of the second split body 46.

As illustrated in Figs. 2, 3, the first lower support section 51 includes a support main body 52, the loop portion 54, and an extension portion 55. These portions are formed integrally by use of a band-shaped steel sheet by press working or the like, for example.

The support main body 52 is a principal portion of the first lower support section 51 which portion supports the pipe P. The support main body 52 is curved arcuately. The support main body 52 supports the pipe P in such a manner as to abut with the pipe P from below.

In the present embodiment, the support main body 52 includes a diameter-increased portion 53. The diameter-increased portion 53 is curved into an arc having a diameter larger than those of the other portions of the support main body 52 and is provided for a lower end portion of the support main body 52. The diameter-increased portion 53 is formed into a large-diameter arc shape by bending outwardly just by the thickness of one support main body 52 from the other portions of the support main body 52. The diameter-increased portion 53 has a through-hole 53a. The through-hole 53a is engaged with an engagement detent 58 provided for the second lower support section 56. In the present embodiment, the through-hole 53a corresponds to an "engagement section."

A portion of the diameter-increased portion 53 on its distal end side (opposite to a coupling section with the first split body 41) is an engagement guide section 53B. The engagement guide section 53B is provided for a portion of the support main body 52 which portion extends toward the distal end side from the through-hole 53a. The engagement guide section 53B is gradually inclined outwardly toward the distal end. The engagement guide section 53B guides the engagement detent 58 provided for the second lower support section 56 to be smoothly engaged with the through-hole 53a at the time when the support section 4 is changed in posture from the open posture to the closed posture.

The loop portion 54 is provided for an upper end portion of the support main body 52 in such a manner as to be continuous with the support main body 52. The loop portion 54 loops outwardly from the support main body 52. Two loop portions 54 are provided separately on the opposite sides of the upper end portion of the support main body 52 in the width direction. The loop portion 44 of the first split body 41 of the upper support section 40 is placed between the pair of loop portions 54. A pivot member 8 is passed through the two loop portions 54 of the first lower support section 51 and the loop portion 44 of the first split body 41. A rivet is used as the pivot member 8 in the present embodiment. The pivot member 8 serves as a pivot point (the swing pivot point H) for swinging of the first split body 41 of the upper support section 40 and the first lower support section 51.

The extension portion 55 extends upward from the support main body 52. The extension portion 55 extends from the support main body 52 to a position overlapping with the upper support section 40 (the first split body 41 in this example) across the loop portions 54 and the swing pivot point H. The extension portion 55 is provided for a central area in the width direction between the two loop portions 54. The extension portion 55 curves arcuately and is placed along an inner surface of the curved portion 43 of the first split body 41 in the closed posture. The extension portion 55 is smaller than the support main body 52 and lighter than the support main body 52.

The second lower support section 56 includes a support main body 57, loop portions 59, and an extension portion 60. These portions are formed integrally by use of a band-shaped steel sheet by press working or the like, for example.

The support main body 57 is a principal portion of the second lower support section 56 which portion supports the pipe P. The support main body 57 is curved arcuately. The support main body 57 supports the pipe P in such a manner as to abut with the pipe P from below.

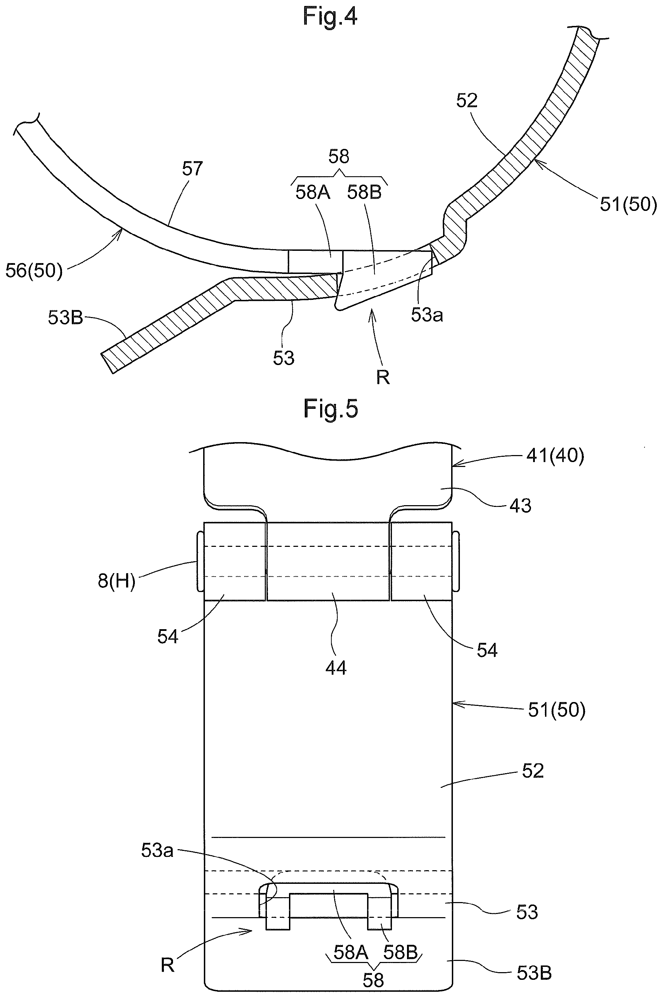

In the present embodiment, the support main body 57 includes the engagement detent 58. The engagement detent 58 is provided in a lower end portion of the support main body 57. The engagement detent 58 projects further from a distal end of the support main body 57. As illustrated in Figs. 4, 5, the engagement detent 58 includes an extension piece 58A and projection pieces 58B. The extension piece 58A extends from the distal end of the support main body 57 along an arc surface of the support main body 57. A pair of projection pieces 58B are provided to extend downward from opposite edges of the extension piece 58A. The engagement detent 58 is engaged with the through-hole 53a of the first lower support section 51. In the present embodiment, the engagement detent 58 corresponds to an "engageable section."

When the engagement detent 58 is engaged with the through-hole 53a of the first lower support section 51, the support section 4 can be stably maintained in the closed posture. More specifically, locking of respective side edges of the pair of projection pieces 58B constituting the engagement detent 58 on inner edges of the through-hole 53a retains the engagement detent 58. Hereby, the support section 4 can be stably maintained in the closed posture. In the present embodiment, a posture maintaining mechanism R is constituted by the engagement detent 58 and the through-hole 53a engaged with each other. Note that, in a case where the support section 4 is to be changed in posture from the closed posture to the open posture, an operator pushes down the engagement guide section 53B to disengage the engagement detent 58 from the through-hole 53a, so that the support section 4 can be changed in posture.

As illustrated in Fig. 2, the loop portion 59 is provided for an upper end portion of the support main body 57 in such a manner as to be continuous with the support main body 57. The loop portion 59 loops outwardly from the support main body 57. Two loop portions 59 are provided separately on the opposite sides of the upper end portion of the support main body 57 in the width direction. The loop portion 49 of the second split body 46 of the upper support section 40 is placed between the pair of loop portions 59. The pivot member 8 is passed through the two loop portions 59 of the second lower support section 56 and the loop portion 49 of the second split body 46. A rivet is used as the pivot member 8 in the present embodiment, as described above. The pivot member 8 serves as the swing pivot point H for swinging of the second split body 46 of the upper support section 40 and the second lower support section 56.

The extension portion 60 extends upward from the support main body 57. The extension portion 60 extends from the support main body 57 to a position overlapping with the upper support section 40 (the second split body 46 in this example) across the loop portions 59 and the swing pivot point H. The extension portion 60 is provided in a central area in the width direction between the two loop portions 59. The extension portion 60 curves arcuately and is placed along an inner surface of the curved portion 48 of the second split body 46 in the closed posture. The extension portion 60 is smaller than the support main body 57 and lighter than the support main body 57.

In the present embodiment, the swing pivot point H (the pivot member 8) is provided at a middle position of the support section 4 in the up-down direction. More specifically, two swing pivot points H (the pivot members 8) are provided at right and left end positions of the support section 4. In a state where the posture maintaining mechanism R does not function (i.e., the engagement detent 58 is not engaged with the through-hole 53a) and no external force is applied, the first lower support section 51 and the second lower support section 56 are suspended with the swing pivot points H (the pivot members 8) serving as axes.

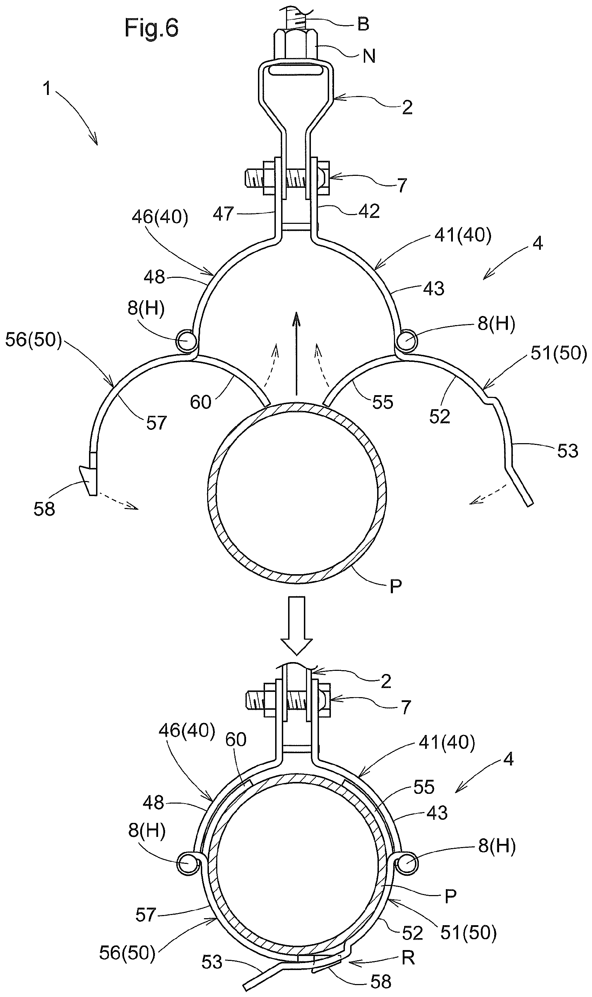

At this time, as illustrated on the upper side in Fig. 6, the support main body 52 of the first lower support section 51 and the support main body 57 of the second lower support section 56 are placed outwardly from the swing pivot points H (the pivot members 8). In the meantime, the extension portion 55 of the first lower support section 51 and the extension portion 60 of the second lower support section 56 are placed inwardly from the swing pivot points H (the pivot members 8).

In order to hold the pipe P in suspension by the pipe support 1 according to the present embodiment, the pipe P is attached to the pipe support 1 from below, with the attachment section 2 being attached, via the flange-nut N, to the hanger bolt B vertically hanging from the structural body S, and with the support section 4 in the open posture being attached to the attachment section 2 via the fastening member 7. In response to the pipe P being lifted, the outer surface of the pipe P abuts with the two extension portions 55, 60, so that the extension portions 55, 60 are lifted upward. Hereby, the first lower support section 51 rotates clockwise in Fig. 6 around the swing pivot point H (the pivot member 8) as a pivot axis, and the second lower support section 56 rotates counterclockwise around the swing pivot point H (the pivot member 8) as a pivot axis.

Hereby, the support section 4 is changed to the closed posture, so that the engagement detent 58 of the second lower support section 56 is engaged with the through-hole 53a of the first lower support section 51 to maintain the closed posture. Thus, the support section 4 is changed from the open posture to the closed posture in response to the attachment of the pipe P, and the closed posture is maintained. Hereby, it is possible to largely improve workability at the time of holding the pipe P in suspension from the structural body S.

### [Other Embodiments]

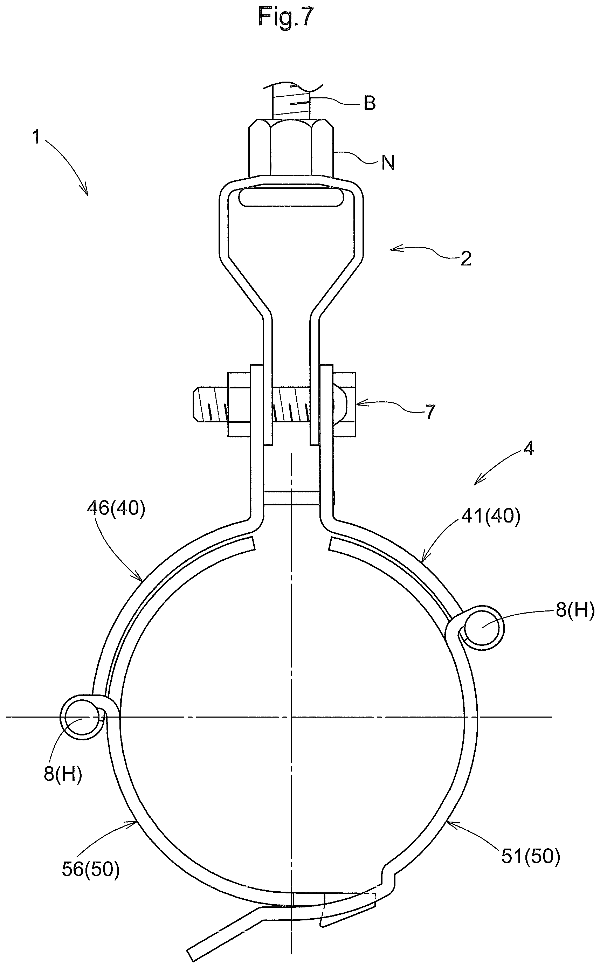

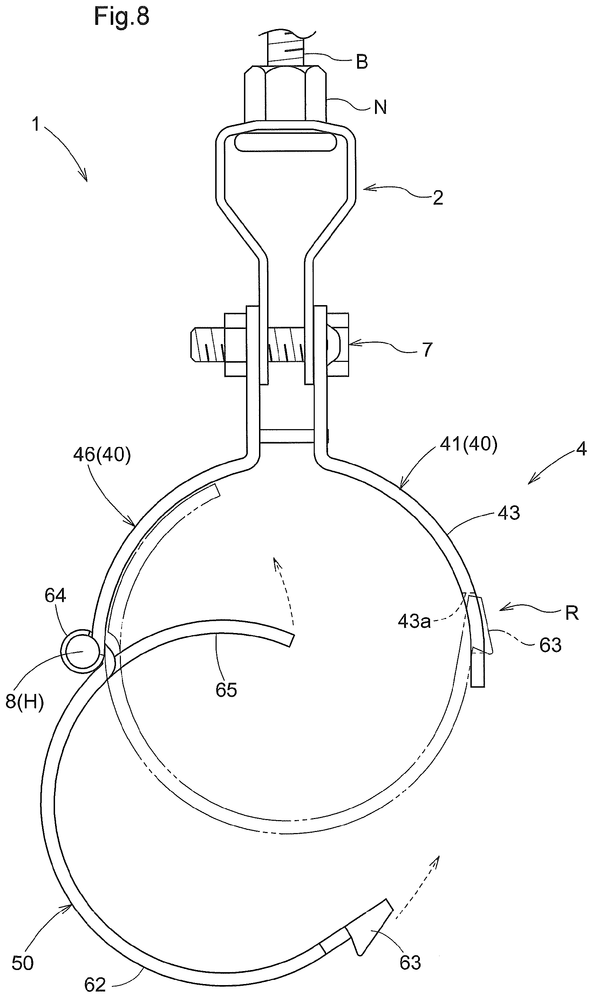

(1) The above embodiment has described, as an example, the configuration in which one flange-nut N is used to attach the attachment section 2 to the hanger bolt B vertically hanging from the structural body S. However, the present invention is not limited to such a configuration, and the attachment section 2 may be attached with upper and lower double nuts, for example.
(2) The above embodiment has described, as an example, the configuration in which the attachment section 2 is constituted by the tongue buckle 20. However, the present invention is not limited to such a configuration, and the attachment section 2 may be constituted by an L-shape flexed plate or the like, for example.
(3) The above embodiment has described, as an example, the configuration in which the upper support section 40 of the support section 4 is constituted by the first split body 41 and the second split body 46 as a pair of split bodies. However, the present invention is not limited to such a configuration, and the whole upper support section 40 may be formed in an integrated manner.
(4) The above embodiment has described, as an example, the configuration in which a rivet is used as the pivot member 8. However, the present invention is not limited to such a configuration, and a pin having a retaining structure, a loosely tightened bolt and nut, or the like can be employed as the pivot member 8, for example, provided that they can swingably couple the upper support section 40 to the lower support section 50.
(5) The above embodiment has described, as an example, the configuration in which two swing pivot points H are provided at right and left end positions of the support section 4. However, the present invention is not limited to such a configuration, and one of the two swing pivot points H may be provided above the middle position of the support section 4 in the up-down direction, for example, as illustrated in Fig. 7. The two swing pivot points H may be both provided above the middle position of the support section 4 in the up-down direction. Alternatively, at least one of the two swing pivot points H may be provided below the middle position of the support section 4 in the up-down direction (except the lowest point). Thus, the swing pivot point H should be provided at a position deviating from the lowest point in the support section 4.
(6) The above embodiment has described, as an example, the configuration in which the lower support section 50 (the first lower support section 51, the second lower support section 56) is swingably coupled to the opposite ends of the upper support section 40. However, the present invention is not limited to such a configuration, and only one lower support section 50 may be swingably coupled to one end of the upper support section 40, for example, as illustrated in Fig. 8. In this case, the lower support section 50 includes a support main body 62, an engagement detent 63 (an example of the "engageable section"), a loop portion 64, and an extension portion 65. These portions correspond to the support main body 57, the engagement detent 58, the loop portion 59, and the extension portion 60 of the second lower support section 56 in the above embodiment, respectively. The first split body 41 of the upper support section 40 has a through-hole 43a (an example of the "engagement section"), and the posture maintaining mechanism R is constituted by the through-hole 43a and the engagement detent 63 engaged with the through-hole 43a.
(7) The above embodiment has described, as an example, the configuration in which the lower support section 50 includes the engagement guide section 53B. However, the present invention is not limited to such a configuration, and the lower support section 50 may not necessarily be provided with the engagement guide section 53B.
(8) The above embodiment has described, as an example, the configuration in which the posture maintaining mechanism R is constituted by the engagement detent 58 and the through-hole 53a engaged with each other. However, the present invention is not limited to such a configuration, and the posture maintaining mechanism R may have other structures, provided that the support section 4 can be stably maintained in the closed posture. For example, the combination of a projection and an engagement detent engaged with each other, the combination of a notch and an engagement detent engaged with each other, and the like may be also employed as the posture maintaining mechanism R. The posture maintaining mechanism R may not necessarily be provided.
(9) The configurations described in the embodiments (the above embodiment and other embodiments; the same applies hereinafter) can be applied in combination with configurations of other embodiments as long as no inconsistency occurs. In terms of the other configurations, the embodiments disclosed in the present specification are just examples in all respects, and various modifications can be made within a range that does not deviate from the gist of this disclosure.

### Description of Reference Numerals

1: pipe support
2: attachment section
4: support section
40: upper support section
41: first split body (split body)
43a: through-hole (engagement section)
46: second split body (split body)
50: lower support section
51: first lower support section
52: support main body
53a: through-hole (engagement section)
53B: engagement guide section
55: extension portion
56: second lower support section
57: support main body
58: engagement detent (engageable section)
60: extension portion
62: support main body
63: engagement detent (engageable section)
65: extension portion
H: swing pivot point
R: posture maintaining mechanism
S: structural body
B: hanger bolt (hanging bar-shaped body)
P: pipe

## Claims

1. A pipe support for holding a pipe in suspension from a structural body, the pipe support comprising:
an attachment section attached to a hanging bar-shaped body vertically hanging from the structural body; and
a support section coupled to the attachment section and configured to hold the pipe,
the support section including:
an upper support section placed upward of the pipe; and
a lower support section swingably coupled to the upper support section via at least one swing pivot point and configured to support the pipe from below,
the lower support section including:
a support main body; and
an extension portion extending from the support main body to a position overlapping with the upper support section across the at least one swing pivot point,
the support section being changed from an open posture, in which the upper support section and the lower support section are opened, to a closed posture, in which the upper support section and the lower support section are closed, in response to attaching of the pipe to the support section.

2. The pipe support according to claim 1, further comprising:
a posture maintaining mechanism configured to maintain the support section in the closed posture.

3. The pipe support according to claim 1 or 2, wherein
the at least one swing pivot point includes a plurality of swing pivot points, and
the lower support section is swingably coupled to opposite ends of the upper support section via the plurality of swing pivot points.

4. The pipe support according to any one of claims 1 to 3, wherein
the support main body is heavier than the extension portion.

5. The pipe support according to any one of claims 1 to 4, wherein
the at least one swing pivot point is set at a position deviating from a lowest point of the support section.

6. The pipe support according to any one of claims 1 to 5, wherein
the upper support section includes a pair of right and left split bodies, and
the pair of right and left split bodies are coupled to each other and incapable of rotation relative to each other.

7. The pipe support according to claim 2, wherein
the posture maintaining mechanism includes
an engageable section provided for the support main body, and
an engagement section with which the engageable section, and
the pipe support further comprises an engagement guide section disposed on a distal end side from the engagement section and configured to guide the engageable section for the engagement with the engagement section.
